# EUROPÄISCHE PATENTSCHRIFT

(11) **EP 1 436 993 B1**
(45) Veröffentlichungstag und Bekanntmachung des Hinweises auf die Patenterteilung: **19.04.2006**
(21) Anmeldenummer: 02776832.4
(22) Anmeldetag: 17.10.2002
(51) Int. Cl.: H04N 7/14, H04N 5/76

(54) **VORRICHTUNG UND VERFAHREN ZUM AUFZEICHNEN VON TON- UND/ODER BILDINFORMATION**
DEVICE AND METHOD FOR RECORDING AUDIO AND/OR VISUAL INFORMATION
DISPOSITIF ET PROCEDE D'ENREGISTREMENT D'INFORMATION AUDIO ET/OU VISUELLE

(30) Priorität: 17.10.2001 DE 10150667
(43) Veröffentlichungstag der Anmeldung: 14.07.2004
(73) Patentinhaber: SONY UNITED KINGDOM LIMITED, Weybridge KT13 0XW (GB)
(72) Erfinder: ZAHN, Matthias, 80638 München (DE)
(74) Vertreter: Müller - Hoffmann & Partner
(86) Internationale Anmeldenummer: PCT/DE2002/003927
(87) Internationale Veröffentlichungsnummer: WO 2003/036972

(56) Entgegenhaltungen:
- EP-A- 1 100 268
- WO-A-97/48230
- US-A- 5 867 205
- US-A- 6 081 750

## Beschreibung

Die vorliegende Erfindung betrifft eine Vorrichtung zum Aufzeichnen, Speichern, Archivieren und/oder Wiedergeben und dergleichen von Ton- und/oder Bildinformation mit einer ersten Empfangseinrichtung zum Empfangen der Ton- und/oder Bildinformation und einer ersten Speichereinrichtung zum Speichern der Ton- und/oder Bildinformation. Ferner betrifft die vorliegende Erfindung ein entsprechendes Verfahren.

Derartige Aufzeichnungsvorrichtungen sind im Stand der Technik vielfach bekannt. Beispielsweise sei hierzu auf einen Kassettenrecorder mit angeschlossenem Radio (z.B. Autoradio mit Kassettendeck), einen Videorecorder oder einen MP3-Player hingewiesen. Nachteilig bei diesen Aufzeichnungsgeraten ist jedoch, daß die Aufzeichnung derselben manuell und zeitaufwendig programmiert werden muss. Ferner sind die zu empfangenden Ton- und/oder Bildinformationen zumeist nur zu einem bestimmten Ausstrahlungszeitpunkt verfügbar. Letzterer ist auch nicht immer bekannt oder dessen Bestimmung erfordert zumindest eine aufwendige Recherche. Dies bedeutet beispielsweise in dem Fall der Aufzeichnung eines Musikwerkes über das Radio mit einem Kassettenrecorder, daß ein Anwender welcher ein aktuelles Musikstück aufzeichnen will, das Radioprogramm kontinuierlich überwachen muß und, falls dann plötzlich das entsprechende Lied gespielt wird, die Aufzeichnung unvermittelt starten muss. Da die aufgezeichneten Daten in diesem Fall nur analog gespeichert sind, ist auch eine Änderung einer bespielten Kassette, wenn etwa neue Lieder aktuell sind, nur aufwendig und unter Qualitätsverlust möglich. Ebenso ist das Laden von MP3-Playern beispielsweise über das Internet sehr aufwendig, da die entsprechenden Lieder erst gefunden werden müssen. Auch kostet in diesem Fall das Herunterladen etwas, und zwar zumindest die Telefongebühren während der online-Verbindung.

Die EP 1 100 268 A2 offenbart ein Verwaltungssystem für audiovisuelle Information, mit dem einem Benutzerprofil entsprechende Sendungen, die aus verschiedenen Audio- und Videoquellen kommen, aufgezeichnet werden können. Diese aufgezeichneten Sendungen können anschließend über Listen der aufgezeichneten Sendungen ausgewählt werden, wobei über ein Expertensystem auch Zusammenfassungen der einzelnen Sendungen erstellt werden können. Das beschriebene Verwaltungssystem dient der Reduzierung der zur Verfügung stehenden Informationsflut durch Filterung von zur Verfügung stehenden Sendungen, Anzeige der gefilterten und aufgezeichneten Sendungen in einer Übersicht und Anbieten des Konsumierens der aufgezeichneten Sendungen oder von ausgewählten Auszügen davon.

Die US 5,876,205 offenbart ein Verfahren und eine Vorrichtung zur Steuerung von Video/Audio und Kanalauswahl für ein Kommunikationssignal auf Grundlage von Textinformation, die den Inhalt eines Kanals eines Signals beschreibt.

Die WO 97/48230 A 1 zeigt ein Verfahren und eine Vorrichtung zum Durchsuchen eines elektronischen Programmhefts unter Verwendung von Programmeigenschaften. Die entsprechend von einem Benutzerprofil ausgewählten Sendungen können dem Benutzer angezeigt oder auch automatisch aufgezeichnet werden.

Die US 6,081,750 offenbart eine ergonomische Mensch-Maschine-Schnittstelle, die ein adaptives auf Mustererkennung basierendes Steuersystem für eine Multimediavorrichtung umfasst. Durch das System wird eine ünexakte Programmierung der Multimediavorrichtung ermöglicht, wobei das System einen Datenstrom in Bezug auf die Übereinstimmung eines Datenmusters vergleicht, um diesen aufzuzeichnen und zu verarbeiten. Hierzu wird der Datenstrom einer adaptiven Mustererkennung unterworfen, um interessierende Merkmale zu extrahieren, damit eine stark komprimierte Darstellung erhalten wird, die effektiv verarbeitet werden kann, um eine Übereinstimmung festzustellen.

Der Erfindung liegt daher die Aufgabe zugrunde, die Nachteile des Standes der Technik zu vermeiden, und insbesondere eine Vorrichtung und ein Verfahren zum Aufzeichnen von Ton- und/oder Bildinformation zu schaffen bzw. anzugeben, mit welchem es möglich wird, die Aufzeichnung wesentlich zu vereinfachen und zu automatisieren. Es soll insbesondere eine Selbstiadefunktionalität realisiert werden. Dies bedeutet, daß eine einmalige Auswahl der interessierenden Werke getroffen wird und die weitere Aufzeichnung automatisch, d.h. mit geringstem Aufwand, durchgeführt wird.

Ein besonderer Vorteil der vorliegenden Erfindung ist, daß das Aufzeichnen der Ton- und/oder Bildinformation in der Regel kostenlos ist, wenn es zu privaten Zwecken erfolgt und der Empfang der Ton- und/oder Bildinformation an sich keine Kosten verursacht.

Ein weiterer Vorteil der vorliegenden Erfindung besteht darin, daß die Programmierung der aufzuzeichnenden Werke äußerst einfach ist, und auch ansonsten komplexe Aufzeichnungsroutinen, wie z.B. "zeichne die aktuellen Top 20 Lieder auf" oder "zeichne alle Songs des Interpreten XY auf" durch einfachste Eingaben realisiert werden können.

Die erfindungsgemäße Aufgabe wird in vorrichtungstechnischer Hinsicht bei einer Vorrichtung der eingangs genannten Art, die ferner eine zweite Speichereinrichtung zum Speichern von für die Ton- und/oder Bildinformation charakteristischen Daten aufweist, und bei der ein Aufzeichnen der Ton- und/oder Bildinformation in der ersten Speichereinrichtung ansprechend auf ein positives Vergleichsergebnis der empfangenen Ton- und/oder Bildinformation mit wenigstens einem der charakteristischen Daten ausgelöst wird, dadurch gelöst, daß die Vorrichtung ferner eine Verarbeitungseinrichtung aufweist, welche aus den mit der ersten Empfangseinrichtung empfangenen Ton- und/oder Bildinformationen ein Identifizierungsdatum als charakteristischen Vektor, z.B. einen ersten Bit-Vektor, bestimmt und diesen mit den als korrespondierende charakteristische Vektoren vorgespeicherten charakteristischen Daten, z.B. mit einem zweiten Bit-Vektor, vergleicht.

Ein Bit-Vektor ist insoweit bevorzugt, da dieser einfach aus der empfangenen Ton- und/oder Bildinformation berechnet werden kann und ebenfalls einen schnellen Vergleich mit den vorgespeicherten charakteristischen Daten ermöglicht.

Dabei können die erste und zweite Speichereinrichtung insbesondere auch in einem einzigen Speichermittel integriert und auch identisch, insbesondere ausgebildet, sein. Unter "Ton- und/oder Bildinformation" wird jegliche (Multimedia-)Information bzw. Daten verstanden, d.h. insbesondere auch Musikstücke, Videos, Filme, Bilder, Photos, Animationen usw. Vorzugsweise ist die erste und/oder zweite Speichereinrichtung ein auswechselbares Speichermedium. Dabei ist besonders bevorzugt, wenn die zweite Speichereinrichtung ein auswechselbares Speichermedium, wie z.B. eine CD, eine DVD, eine SmartMedia Card, ein Memory Stick u.ä. ist.

Bevorzugt ist eine zweite Empfangseinrichtung vorgesehen, mit welcher die für die Ton- und/oder Bildinformation charakteristischen Daten empfangen werden. Die zweite Empfangseinrichtung kann insbesondere auch identisch mit der ersten Empfangseinrichtung ausgebildet sein oder in dieser integriert sein. Dabei können die ersten und zweiten Empfangseinrichtungen bzw. -mittel gleiche oder verschieden Übertragungstechnologien und -techniken verwenden. Durch die zweite Empfangseinrichtung wird es insbesondere auch möglich, einen gesonderten Übertragungsweg zur Übertragung der für die Ton- und/oder Bildinformation charakteristischen Daten vorzusehen. Diese charakteristischen Daten, welche auch als "Eigenvektoren" beispielsweise für Musikstücke in der vorliegenden Anmeldung bezeichnet werden, können somit in die erfindungsgemäße Vorrichtung geladen werden. Selbstverständlich können grundsätzlich diese auch in der Vorrichtung voreingestellt sein, was die zweite Empfangseinrichtung für diese Eigenvektoren entbehrlich macht. Die zweite Empfangseinrichtung kann grundsätzlich identisch zu der ersten Empfangseinrichtung sein oder auch einen davon unabhängigen Übertragungspfad realisieren. Grundsätzlich kann die Empfangseinrichtung auch jegliche Art von Empfangsmittel sein, wie z. B. eine Antenne oder eine Anschlußmöglichkeit für ein Kabel. Ebenfalls können die erste und zweite Empfangseinrichtung zum Empfang von allen Arten von Daten und Datenformaten geeignet sein.

Vorzugsweise ist die zweite Empfangseinrichtung, insbesondere über das Internet, mit den charakteristischen Daten programmierbar. Beispielsweise auf einer speziell hierzu eingerichteten Website, welche für einen Anwender unter einer bestimmten URL (Uniform Resource Locator) aufrufbar ist, kann ein Anwender die charakteristischen Daten in die erfindungsgemäße Vorrichtung laden. Auf dem dieser Website zugehörigen Server sind dazu eine Vielzahl von charakteristischen Daten vorzugsweise bereits vorhanden, wobei der Anwender beispielsweise bestimmte Musikstücke, z.B. durch Anklicken, auswählt und eine Übertragung der charakteristischen Daten (unter Umständen zusammen mit zugehörigen Metadaten) in die erfindungsgemäße Vorrichtung auslöst. Grundsätzlich kann hierzu auf der Website eine Menüsteuerung vorgesehen sein, welche überdies sehr komfortabel ausgebildet werden kann, so daß insbesondere auch Suchfunktionen integriert sind. Beispielsweise könnte in Zusammenhang mit der vorliegenden Erfindung eine Option vorhanden sein, charakteristische Daten zu allen Ton- und/oder Bildinformationen eines bestimmten Interpreten in die erfindungsgemäße Vorrichtung zu laden. Ebenfalls könnten auch auf der Website bereits alle Top 20 Hits voreingestellt sein, wobei der Anwender durch einfaches Anklicken eines entsprechenden Buttons die Übertragung der korrespondierenden Eigenvektoren der entsprechenden Musikstücke in die erfindungsgemäße Vorrichtung auslöst. Die Übertragung in die erfindungsgemäße Vorrichtung kann beispielsweise über eine Funkverbindung realisiert werden. Ebenfalls ist es möglich, daß die erfindungsgemäße Vorrichtung zum Laden der entsprechenden Eigenvektoren in ein entsprechendes an einen PC angeschlossenes Gerät eingesetzt wird.

Vorteilhafterweise weist die Vorrichtung ferner eine Pufferspeichereinrichtung auf, in der die empfangene Ton- und/oder Bildinformation für deren Vergleich mit wenigstens einem der charakteristischen Daten zwischengespeichert wird. Die Pufferspeichereinrichtung dient insbesondere dazu eine ausreichende Menge des empfangenen Signals zwischenzuspeichem, so daß beispielsweise ein vollständiges Musikstück sich darin gespeichert befindet, der erfindungsgemäß vorgesehene Vergleich zuverlässig durchgeführt werden kann und ein erkanntes Musikstück ansprechend auf ein positives Vergleichsergebnis in der Vorrichtung gespeichert werden kann.

Bevorzugt ist die Pufferspeichereinrichtung ein FIFO-Speicher. Auf diese Weise wird eine einfache und kostengünstige Möglichkeit geschaffen, einen ausreichenden Speicherplatz für das sich in der Regel ständig ändernde und kontinuierlich ausgestrahlte Eingangssignal für die erste Empfangseinrichtung vorzusehen.

Vorzugsweise weist die Vorrichtung ferner eine Abspieleinrichtung zum Abspielen der in der ersten Speichereinrichtung gespeicherten Ton- und/oder Bildinformation auf. Somit wird es für einen Anwender möglich, die erfindungsgemäß in die Vorrichtung geladene Ton- und/oder Bildinformation, insbesondere ein Musikstück, insbesondere ohne das Erfordernis zusätzliche Geräte anzuschließen, wiederzugeben.

Ferner ist bevorzugt, daß die Vorrichtung ferner eine Auswahleinrichtung zum Auswählen einer in der ersten Speichereinrichtung gespeicherten Ton- und/oder Bildinformation aufweist. Durch die Auswahleinrichtung wird es möglich, auf eine einfache und komfortable Art und Weise auf die unter Umständen große Vielzahl der gespeicherten Informationen zuzugreifen.

Bevorzugt speichert die zweite Speichereinrichtung der Ton- und/oder Bildinformation zugeordnete weitere Daten. Derartige weitere Daten könnten insbesondere sogenannte Metadaten sein, welche beispielsweise den Namen des aufgezeichneten Musikstücks oder von dessen Interpreten aufweisen.

Vorteilhafterweise weist die Vorrichtung eine Anzeigeeinrichtung auf, in welcher die der Ton- und/oder Bildinformation zugeordneten weiteren Daten angezeigt werden. Somit können beim Abspielen beispielsweise eines erfindungsgemäß aufgezeichneten Musikstücks gleichzeitig in der dafür vorgesehenen Anzeigeeinrichtung beispielsweise der Titel des Musikstücks angezeigt werden. Ebenfalls wird es jedoch möglich, auf eine einfache und kostengünstige Art und Weise eine Menüführung zu realisieren, mit welcher der Anwender die in der ersten Speichereinrichtung gespeicherten Ton- und Bildinformationen auswählen kann. Durch die zusätzlich aufgenommenen Metadaten ist nämlich jedes in der Vorrichtung gespeichertes Musikstück eindeutig identifizierbar und "benennbar".

Bevorzugt ist die zweite Empfangseinrichtung zum Empfangen der der Ton- und/oder Bildinformation zugeordneten weiteren Daten vorgesehen. Wie oben bereits erläutert wurde werden über die zweite Empfangseinrichtung die charakteristischen Daten, z.B. für ein Musikstück, an die erfindungsgemäße Vorrichtung übertragen. Da die zugeordneten weiteren Daten ebenfalls für ein Musikstück charakteristisch sind, ist es besonders vorteilhaft zu deren Übertragung in die erfindungsgemäße Vorrichtung ebenfalls die zweite Empfangseinrichtung zu nutzen. Ebenfalls ist es vorteilhaft diese weiteren Daten zusammen mit den charakteristischen Daten in die Vorrichtung zu übermitteln. Bevorzugt ist die zweite Empfangseinrichtung, insbesondere über das Internet, mit den der Ton- und/oder Bildinformation zugeordneten weiteren Daten programmierbar.

Vorzugsweise ist die erste Empfangseinrichtung im Wesentlichen kontinuierlich auf Empfang. Durch den kontinuierlichen Empfang der ersten Empfangseinrichtung wird sichergestellt, daß die Menge an Eingangssignalen hinreichend groß ist, um ein Laden der erfindungsgemäßen Vorrichtung möglichst schnell sicherzustellen. Falls beispielsweise die erfindungsgemäße Vorrichtung in einem Radio integriert ist, so ist insbesondere bevorzugt, den Betrieb der erfindungsgemäßen Vorrichtung auch dann sicherzustellen, wenn der Anwender das Radio gar nicht in Betrieb hat. Hierzu ist daher ein spezieller Betriebsmodus vorgesehen, in welchem die erfindungsgemäße Vorrichtung kontinuierlich einen oder mehrere Radiosender auf das Auftreten eines aufzuzeichnenden Musikstückes hin überwacht,

Vorteilhafterweise lädt die zweite Empfangseinrichtung ansprechend auf eine entsprechende Eingabe eines Anwenders und/oder zu vorbestimmten Zeitpunkten sich von einer externen Quelle aktuelle Daten für die zweite Speichereinrichtung herunter, wobei diese heruntergeladenen Daten die in der zweiten Speichereinrichtung gespeicherten Daten ergänzen und/oder ersetzen. Insoweit kann sichergestellt werden, daß mit möglichst wenig Datenübertragung die zweite Speichereinrichtung stets auf dem vom Anwender gewünschten Stand ist.

Ferner ist bevorzugt, daß die charakteristischen Daten die Ton- und/oder Bildinformation aus einer vorgegebenen Menge eindeutig identifizieren. Die charakteristischen Daten, welche auch als Eigenvektoren bezeichnet werden können, sind beispielsweise für ein Musikstück charakteristische Daten, insbesondere ein Bit-Vektor von vorzugsweise 128 Bit Länge. Die vorgegebene Menge entspricht dabei der Menge von Musikstücken, welche vom Betreiber des erfindungsgemäßen Systems angeboten wird.

Ferner ist bevorzugt, daß ein charakteristischer Vektor eine Ton- und/oder Bildinformation, insbesondere ein zu speicherndes Ton- und/oder Bildwerk, eindeutig identifiziert.

Vorteilhafterweise weisen die charakteristischen Daten die Länge eines Musik- oder Filmwerkes auf. Die Länge eines Musik- oder Filmwerkes ist ein besonders charakteristisches Merkmal für das Werk, welches bereits eine gute Charakterisierung eines Musikwerks mit einer kleinen Datenmenge ermöglicht. Um beispielsweise das Musikwerk eindeutig zu identifizieren, ist bevorzugt, daß die Auswerteeinrichtung das in der Pufferspeichereinrichtung gespeicherte Signal insoweit analysiert und insbesondere Sprache, wie sie in einem Radiosignal vorkommt, von dem Musiksignal trennt.

Vorzugsweise empfangen die erste und zweite Empfangseinrichtung analoge und/oder digitale Signale. Besonders bevorzugt werden analoge Signale von der ersten Empfangseinrichtung verwendet, da diese weit verbreitet sind und somit die erfindungsgemäße Vorrichtung beispielsweise in einem Radio realisiert werden kann.

Vorzugsweise weist die Vorrichtung eine Speichereinrichtung auf, welche die erste Speichereinrichtung und die zweite Speichereinrichtung umfaßt. Hierdurch wird ein einfacher Aufbau der erfindungsgemäßen Vorrichtung sichergestellt welche insbesondere auch eine Implementierung als integrierten Schaltkreis auf einfache Weise ermöglicht.

Vorzugsweise weist die Vorrichtung eine Empfängereinrichtung auf, welche die erste Empfängereinrichtung und die zweite Empfängereinrichtung umfaßt. Hierdurch wird der Aufwand insoweit reduziert, als daß nur eine Empfängereinrichtung verwendet wird.

Vorteilhafterweise ist die Vorrichtung portabel. Auf diese Weise kann ein Anwender die erfindungsgemäße Vorrichtung mit sich herumtragen und stets auf gespeicherte Musikstücke zugreifen.

Bevorzugt ist die Vorrichtung in einem der folgenden Geräte integriert: (Auto-)Radio, MP3-Spieler, Walkman, Kassettenrecorder, Fernseher, Videorecorder, Mobiltelefon und dergleichen.

Die erfindungsgemäße Aufgabe wird in verfahrenstechnischer Hinsicht bei einem Verfahren der eingangs genannten Art, das ferner das Speichern, insbesondere einer Vielzahl, von für die Ton- und/oder Bildinformation charakteristischen Daten bzw. Identifizierungsdaten umfasst und bei dem ein Aufzeichnen der Ton- und/oder Bildinformation in der (ersten) Speichereinrichtung ansprechend auf ein positives Vergleichsergebnis der empfangenen Ton- und/oder Bildinformation mit wenigstens einem der charakteristischen Daten ausgelöst wird, dadurch gelöst daß die Vorrichtung ferner eine Verarbeitungseinrichtung aufweist, welche aus der mit der ersten Empfangseinrichtung empfangenen Ton- und/oder Bildinformation ein Identifizierungsdatum als charakteristischen Vektor, z.B. einen ersten Bit-Vektor, bestimmt und diesen mit den als korrespondierende charakteristische Vektoren vorgespeicherten **charakteristischen** Daten, z.B. einem zweiten Bit-Vektor, vergleicht.

Weitere bevorzugte Ausführungsformen der Erfindung sind in den abhängigen Patentansprüchen offenbart.

Die Erfindung, sowie weitere Merkmale, Vorteile, Ziele und Anwendungsmöglichkeiten derselben wird bzw. werden nachfolgend anhand einer Beschreibung von bevorzugten Ausführungsbeispielen unter Bezugnahme auf die beigefügte Zeichnung näher erläutert. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbezichung. In den Zeichnungen zeigt:

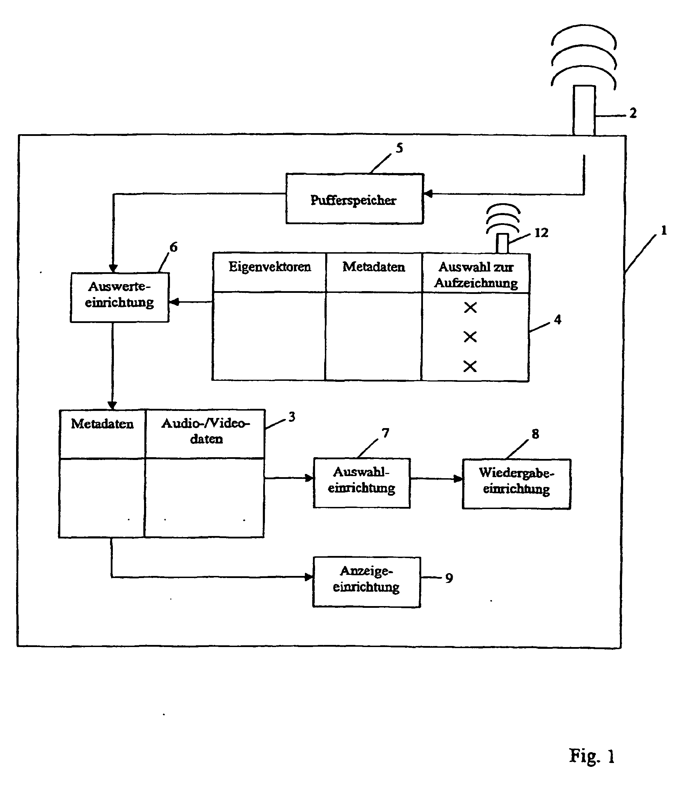

- Fig. 1: ein stark schematisches Blockschaltbild der erfindungsgemäßen Aufzeichnungs- und Wiedergabeeinrichtung.

Der Fig. 1 entnimmt man eine schematische Darstellung der erfindungsgemäßen Vorrichtung 1 zum Aufzeichnen von Ton- und/oder Bildinformationen. Vorzugsweise ist die Vorrichtung 1 portabel und in einem (Auto)-Radio, MP3-Spieter, Walkman, Kassettenrecorder, Fernseher, Videorecorder, Mobiltelefon und dergleichen integriert. Selbstverständlich kann die vorliegende Erfindung auch in Kombinationen dieser Geräte integriert sein. Die Vorrichtung 1 weist eine Empfangseinrichtung 2 auf, welche schematisch als Antenne dargestellt ist. Die Empfangseinrichtung 2 kann beispielsweise eine Radioantenne sein, welche ein kontinuierliches analoges Radiosignal empfängt. Selbstverständlich kann auch bei einem kontinuierlichen Eingangssignal die Empfangseinrichtung 2 - alternativ zu einem kontinuierlichen Empfang - lediglich zu vorbestimmten Zeitpunkten auf Empfang geschaltet sein, beispielsweise bei einem Radiogerät, wenn dieses tatsächlich eingeschaltet ist und die entsprechenden Radioprogramme einem Anwender vorspielt. Für einen Fachmann ist klar, daß die Empfangseinrichtung 2 auch anders als die dargestellte Antenne ausgebildet sein kann, und beispielsweise als eine Empfangseinrichtung für ein Kabel-Signal, z.B. für Radio oder Fernsehen, ausgebildet sein kann. Im bevorzugten Ausführungsbeispiel sind die von der Empfangseinrichtung 2 empfangenen Signale Rundfunksignale und werden nach deren Empfang in einem Pufferspeicher 5, welcher vorzugsweise als FIFO-Speicher (first in first out) ausgebildet ist, zwischengespeichert. Die Vorrichtung 1 weist ferner einen zweite Speichereinrichtung 4 auf, in welcher charakteristische Daten für bestimmte Ton- und/oder Bildinformationen gespeichert sind. Die charakteristischen Daten werden in der Zeichnung als "Eigenvektoren" der entsprechenden Ton- und/oder Bildinformation bezeichnet. Diese "Eigenvektoren" können beispielsweise in der zweiten Speichereinrichtung 4 voreingestellt bzw. vorgespeichert sein. Beispielsweise sind die für die Ton- und/oder Bildinformation charakteristischen Daten jeweils ein Bit-Vektor der Länge 128 Bit zur Identifizierung eines Musiktitels. In der zweiten Speichereinrichtung 4 ist daher eine Vielzahl von derartigen Bit-Vektoren gespeichert, beispielsweise die allen bekannten Musiktiteln eines Interpreten zugehörigen Bit-Vektoren. Die zur Identifizierung der Ton- und/oder Bildinformation vorgesehenen charakteristischen Daten können grundsätzliche alle geeigneten Daten sein. Als eine Teilinformation hiervon kommt insbesondere die exakte Länge eines Musikstücks in Betracht. Aber auch andere charakteristische Informationen, z.B. ein bestimmtes Frequenzspektrum, bestimmt Klang- oder Geräusch-Sequenzen usw. können zur eindeutigen Identifizierung eines Musikwerkes herangezogen werden. Wenn die charakteristischen Daten z.B. alle Musikwerke eines Interpreten aufweisen, kann auf diese Weise z.B. ein sich selbst aufladende Audio-Jukebox realisiert werden, welche sich kontinuierlich mit den entsprechenden Musikwerken auflädt Wie im Folgenden noch näher erläutert wird, kann somit beispielsweise ein "XY-Player" realisiert werden, welcher alle Lieder des Interpreten XY aufgezeichnet besitzt. Genauer sind in diesem Anwendungsfall in der erfindungsgemäßen Vorrichtung 1 alle Eigenvektoren, welche zu den entsprechenden Liedern des Interpreten XY gehören, gespeichert. Nach und nach wird durch den Betrieb der erfindungsgemäßen Vorrichtung die erste Speichereinrichtung 3 gefüllt, so daß im Laufe der Zeit, abhängig von dem über die erste Empfangseinrichtung 2 empfangenen Eingangssignal, alle Lieder des Interpreten XY gespeichert sind. Im bevorzugten Ausführungsbeispiel werden in der Speichereinrichtung 4 noch weiteren Informationen abgelegt, wobei dies für das jeweilige Musikwerk charakteristische Metadaten sind, wie z.B. Name des Interpreten oder Titel des Musikwerkes. Ferner ist ein Speicherfeld vorgesehen, welches anzeigt, ob das in der Speichereinrichtung durch seinen Eigenvektor gespeicherte Musikwerk zur Aufzeichnung ausgewählt wird. In der Zeichnung sind die ersten und zweiten Speichereinrichtungen 3, 4 jeweils als Tabelle schematisch dargestellt, um die Zuordnung der einzelnen Daten schematisch anzuzeigen. Dies bedeutet, daß beispielsweise die Eigenvektoren der Ton- und/oder Bildinformation mit einer entsprechenden Zuordnung zu den zugehörigen Metadaten gespeichert wird. Entsprechendes gilt für die erste Speichereinrichtung 3, welche die tatsächlich aufgezeichneten Audio-/Videodaten und die zugehörigen Metadaten mit einer entsprechenden Zuordnung speichert. Selbstverständlich können die Speicherinhalte der ersten und zweiten Speichereinrichtungen 3, 4 auch wieder gelöscht werden. Insbesondere für die erste Speichereinrichtung 3 ist bevorzugt, daß die aufgezeichneten Audio-/Videodaten komprimiert gespeichert werden. Insbesondere für Musikstücke ist hierzu das MP3-Kompressionsverfahren besonders geeignet. Auf diese Weise wird es möglich, eine Vielzahl von Eigenvektoren in der Speichereinrichtung 4 vorgespeichert zu besitzen, wobei jeweils nur ein Teil davon vom Anwender durch eine entsprechende Eingabe zur Aufzeichnung ausgewählt wird. Wie bereits bemerkt wurde können diese Eigenvektoren grundsätzlich in der zweiten Speichereinrichtung 4 vorgespeichert sein. Ebenfalls ist es möglich, daß die Eigenvektoren in der Vorrichtung 1 selbst bestimmt werden, beispielsweise dadurch, daß ein in der Pufferspeichereinrichtung 5 gespeichertes Musikwerk entsprechend analysiert wird. Neben den vorerwähnten Möglichkeiten der Vorspeicherung bzw. Voreinstellung und der Selbstprogrammierung kann alternativ oder zusätzlich dazu vorgesehen sein, daß die zweite Speichereinrichtung mit den entsprechenden Informationen von einer externen Quelle versorgt wird. Bevorzugt ist dazu eine zweite Empfangseinrichtung 12 vorgesehen, welche das Laden der zweiten Speichereinrichtung 4 von einer externen Quelle ermöglicht. Die zweite Speichereinrichtung 12 kann, wie in der Zeichnung dargestellt ist, ebenfalls als Antenne ausgebildet sein, und kann insbesondere mit der ersten Empfangseinrichtung 2 identisch sein. In einem derartigen Fall könnte sowohl das Laden des Pufferspeichers 5 als auch das Laden der zweiten Speichereinrichtung 4 über ein analoges Radiosignal erfolgen. Zur Übertragung der Eigenvektoren bzw. auch der weiteren Informationen, wie z.B. Metadaten, müßte dann aber das analoge Radiosignal entsprechend abgeändert werden. Es sei bemerkt, daß die zweite Empfangseinrichtung 12 grundsätzlich aber irgendeine Empfangseinrichtung sein kann. Beispielsweise kann die zweite Empfangseinrichtung 12 ein entsprechender Kabelanschluß sein, welcher an ein dafür vorgesehenes Gerät, beispielsweise einem PC, angeschlossen wird. Ebenfalls könnte das Laden der Eigenvektoren bzw. der Metadaten in die zweite Speichereinrichtung 4 durch auch eine als entsprechende drahtlose Funkschnittstelle als ausgebildete Empfangseinrichtung 12 erfolgen. Ferner weist die erfindungsgemäße Vorrichtung 1 eine Verarbeitungs- bzw. Auswerteeinrichtung 6 auf, welche aus einem in der Pufferspeichereinrichtung 5 gespeicherten Musikwerk einen charakteristischen Vektor bestimmt. Beispielsweise ist dies ein Bit-Vektor der Länge 128 Bit. Dieser Bit-Vektor wird dann ebenfalls in der Auswerteeinrichtung 6 mit einem in der zweiten Speichereinrichtung 4 gespeicherten Eigenvektor verglichen. Falls das Ergebnis dieses Vergleiches positiv, d.h. falls die Vorrichtung 1 das in der Pufferspeichereinrichtung 5 gespeicherte Musikwerk als ein vom Anwender beispielsweise durch das Auswahlfeld in der zweiten Speichereinrichtung 4 ausgewähltes Musikwerk erkannt, wird das Musikwerk, d.h. die entsprechenden Audio-/Videodaten bzw. auch die in der zweiten Speichereinrichtung 4 gespeicherten zugehörigen Metadaten, in einer ersten Speichereinrichtung 3 abgelegt. Vorzugsweise werden die Audio-/Videodaten vor der Speicherung in der ersten Speichereinrichtung 3 komprimiert, wobei z.B. für Audiodaten das MP3-Format bevorzugt verwendet wird. Falls das Ergebnis des in der Auswerteeinrichtung 6 durchgeführten Vergleiches negativ ist, wird keine weitere Bearbeitung durchgeführt und der Speicherinhalt des Pufferspeichers 5 entsprechend dem FIFO-Prinzip durch über die erste Empfangseinrichtung 2 zwischenzeitlich weiter empfangene Signale überschrieben. Wie bereits zuvor bemerkt wurde kann insoweit die Auswerteeinrichtung 6 auch zu in der Pufferspeichereinrichtung 5 zwischengespeicherten Musikwerken entsprechende Eigenvektoren, d.h. charakteristische Daten, bestimmen, und diese bei den ebenfalls als Eigenvektoren in der zweiten Speichereinrichtung 4 zur zukünftigen Aufzeichnung ablegen. Dies ist beispielsweise in einem Anwendungsfall erwünscht, in welchem der Anwender ein Musikwerk hört und sich während des Abspielens des Musikwerkes dafür entscheidet, daß er für dieses Musikwerk beim nächsten Auftreten in dem über die erste Empfangseinrichtung 2 empfangenen Audiosignal eine Aufzeichnung durchführen möchte. Unabhängig von anderen Betriebsarten der Vorrichtung 1, welche z.B. einen normalen Radiobetrieb aufweisen, kann der Anwender durch eine geeignete Menüsteuerung über eine Auswahleinrichtung 7 in der ersten Speichereinrichtung 3 erfindungsgemäß gespeicherte Audio-/Videodaten auswählen, beispielsweise durch Sprachsteuerung oder eine entsprechende Tastatureingabe. Derartig ausgewählte Audio-/Videodaten können durch eine Wiedergabe- bzw. Abspieleinrichtung 8 einem Anwender vorgeführt werden. Insbesondere wenn die Vorrichtung 1 in einem Radiogerät ausgebildet ist, können selbstverständlich zur Realisierung der erfindungsgemäßen Vorrichtung 1 bei dem entsprechenden Radiogerät für den normalen Radiobetrieb vorhandene Komponenten zum Zwecke der vorliegenden Erfindung verwendet werden. Dies gilt insbesondere für die erste Empfangseinrichtung 2, welche in diesem Fall die Radioantenne ist, aber auch für die Wiedergabeeinrichtung 8. Ein besonderer Vorteil der vorliegenden Erfindung besteht darin, daß durch die in der ersten Speichereinrichtung 3 gespeicherten Metadaten bei der Auswahl der entsprechenden Audio-/Videodaten durch die Auswahleinrichtung 7 aber auch während der Wiedergabe durch die Wiedergabeeinrichtung 8 auf einer Anzeigeeinrichtung 9, wie beispielsweise Titel eines Musikwerkes, angezeigt werden können.

Die Erfindung wurde zuvor anhand von bevorzugten Ausführungsformen derselben näher erläutert. Für einen Fachmann ist es jedoch offensichtlich, daß unterschiedliche Abwandlungen und Modifikationen gemacht werden können, ohne den der Erfindung zugrundeliegenden Gedanken zu verlassen. Durch die vorliegende Erfindung wird insbesondere eine passive Suchmaschine realisiert, welche einen sich laufend ändemdem Datenstrom nach voreingestellten bzw. "nachladbaren" Suchkriterien absucht. Ferner wird durch die Erfindung eine sich selbst ladende Audio- bzw. Video-Jukebox geschaffen, welche ein planmäßiges Aufzeichnen von Ton- und/oder Bildinformation und Erstellung einer Multimedia-Datenbibliothek bei minimalem Aufwand erreicht.

### Bezugszeichenliste:

- 1: Vorrichtung
- 2: erste Empfangseinrichtung
- 3: erste Speichereinrichtung
- 4: zweite Speichereinrichtung
- 5: Pufferspeichereinrichtung
- 6: Auswerte- bzw. Verarbeitungseinrichtung
- 7: Auswahleinrichtung
- 8: Wiedergabe- bzw. Abspieleinrichtung
- 9: Anzeigeeinrichtung
- 12: zweite Empfangseinrichtung

## Patentansprüche

1. Vorrichtung (1) zum Aufzeichnen von Ton- und/oder Bildinformation mit einer ersten Empfangseinrichtung (2) zum Empfangen der Ton- und/oder Bildinformation und einer ersten Speichereinrichtung (3) zum Speichern der Ton- und/oder Bildinformation, wobei die Vorrichtung (1) ferner eine zweite Speichereinrichtung (4) zum Speichern von für die Ton- und/oder Bildinformation charakteristischen Daten aufweist, und bei der ein Aufzeichnen der Ton- und/oder Bildinformation in der ersten Speichereinrichtung (3) ansprechend auf ein positives Vergleichsergebnis der empfangenen Ton- und/oder Bildinformation mit wenigstens einem der charakteristischen Daten ausgelöst wird, **dadurch gekennzeichnet, daß** die Vorrichtung ferner eine Verarbeitungseinrichtung (6) aufweist, welche aus der mit der ersten Empfangseinrichtung empfangenen Ton- und/oder Bildinformation ein Identifizierungsdatum als charakteristischen Vektor bestimmt und diesen mit den als korrespondierende charakteristische Vektoren vorgespeicherten charakteristischen Daten vergleicht.

2. Vorrichtung (1) nach Anspruch 1, **dadurch gekennzeichnet, daß** eine zweite Empfangseinrichtung (12) vorgesehen ist, mit welcher die für die Ton- und/oder Bildinformation charakteristischen Daten empfangen werden.

3. Vorrichtung (1) nach Anspruch 2, **dadurch gekennzeichnet, daß** die zweite Empfangeinrichtung (12), insbesondere über das Internet, mit den charakteristischen Daten programmierbar ist.

4. Vorrichtung (1) nach einem der Ansprüche 1 bis 3, **dadurch gekennzeichnet, daß** die Vorrichtung (1) ferner eine Pufferspeichereinrichtung (5) aufweist, in der die empfangene Ton- und/oder Bildinformation für deren Vergleich mit wenigstens einem der charakteristischen Daten zwischengespeichert wird.

5. Vorrichtung (1) nach Anspruch 4, **dadurch gekennzeichnet, daß** die Pufferspeichereinrichtung (5) ein FIFO-Speicher ist.

6. Vorrichtung (1) nach einem der vorhergehenden Ansprüche, **dadurch gekennzeichnet, daß** die Vorrichtung (1) ferner eine Abspieleinrichtung (8) zum Abspielen der in der ersten Speichereinrichtung (3) gespeicherten Ton- und/oder Bildinformation aufweist.

7. Vorrichtung (1) nach einem der vorhergehenden Ansprüche, **dadurch gekennzeichnet, daß** die Vorrichtung (1) ferner eine Auswahleinrichtung (7) zum Auswählen der in der ersten Speichereinrichtung (3) gespeicherten Ton- und/oder Bildinformation aufweist.

8. Vorrichtung (1) nach einem der vorhergehenden Ansprüche, **dadurch gekennzeichnet, daß** die zweite Speichereinrichtung (4) der Ton- und/oder Bildinformation zugeordnete weitere Daten speichert.

9. Vorrichtung (1) nach Anspruch 8, **dadurch gekennzeichnet, daß** die Vorrichtung (1) eine Anzeigeeinrichtung (9) aufweist, in welcher die der Ton- und/oder Bildinformation zugeordneten weiteren Daten angezeigt werden.

10. Vorrichtung (1) nach Anspruch 8 oder 9, **dadurch gekennzeichnet, daß** die zweite Empfangseinrichtung (12) zum Empfangen der der Ton- und/oder Bildinformation zugeordneten weiteren Daten vorgesehen ist.

11. Vorrichtung (1) nach Anspruch 10, **dadurch gekennzeichnet, daß** die zweite Empfangseinrichtung (12), insbesondere über das Internet, mit den der Ton- und/oder Bildinformation zugeordneten weiteren Daten programmierbar ist.

12. Vorrichtung (1) nach einem der vorhergehenden Ansprüche, **dadurch gekennzeichnet, daß** die erste Empfangseinrichtung (2) im Wesentlichen kontinuierlich auf Empfang ist.

13. Vorrichtung (1) nach einem der vorhergehenden Ansprüche, **dadurch gekennzeichnet, daß** die zweite Empfangseinrichtung (12) ansprechend auf eine entsprechende Eingabe eines Anwenders und/oder zu vorbestimmten Zeitpunkten sich von einer externen Quelle aktuelle Daten für die zweite Speichereinrichtung (4) herunterlädt, wobei diese heruntergeladenen Daten die in der zweiten Speichereinrichtung (4) gespeicherten Daten ergänzen und/oder ersetzen.

14. Vorrichtung (1) nach einem der vorhergehenden Ansprüche; **dadurch gekennzeichnet, daß** die charakteristischen Daten die Ton- und/oder Bildinformation aus einer vorgegeben Menge eindeutig identifizieren.

15. Vorrichtung (1) nach einem der vorhergehenden Ansprüche, **dadurch gekennzeichnet, daß** ein charakteristischer Vektor eine Ton- und/oder Bildinformation, insbesondere ein zu speicherndes Ton- und/oder Bildwerk, eindeutig identifiziert.

16. Vorrichtung (1) nach einem der vorhergehenden Ansprüche, **dadurch gekennzeichnet, daß** die charakteristischen Daten die Länge eines Musik- oder Filmwerkes aufweisen.

17. Vorrichtung (1) nach einem der vorhergehenden Ansprüche, **dadurch gekennzeichnet, daß** die erste und zweite Empfangseinrichtung (2, 12) analoge und/oder digitale Signale empfangen.

18. Vorrichtung (1) nach einem der vorhergehenden Ansprüche, **dadurch gekennzeichnet, daß** die Vorrichtung eine Speichereinrichtung aufweist, welche die erste Speichereinrichtung (3) und die zweite Speichereinrichtung (4) umfasst.

19. Vorrichtung (1) nach einem der vorhergehenden Ansprüche, **dadurch gekennzeichnet, daß** die Vorrichtung eine Empfängereinrichtung aufweist, welche die erste Empfängereinrichtung (2) und die zweite Empfängereinrichtung (12) umfasst.

20. Vorrichtung (1) nach einem der vorhergehenden Ansprüche, **dadurch gekennzeichnet, daß** die Vorrichtung (1) portabel ist.

21. Vorrichtung (1) nach einem der vorhergehenden Ansprüche, **dadurch gekennzeichnet, daß** die Vorrichtung (1) in einem der folgenden Geräte integriert ist:
(Auto-)Radio, MP3-Spieler, Walkman, Kassettenrecorder, Fernseher, Videorecorder, DVD-Aufzeichnungs- und/oder Wiedergabegerät, PDA, Mobiltelefon und dergleichen.

22. Verfahren zum Aufzeichnen von Ton- und/oder Bildinformation mit einer Vorrichtung (1) welche eine erste Empfangseinrichtung (2) zum Empfangen der Ton- und/oder Bildinformation, eine erste Speichereinrichtung (3) zum Speichern der Ton- und/oder Bildinformation und ferner eine zweite Speichereinrichtung (4) zum Speichern von für die Ton- und/oder Bildinformation charakteristischen Daten aufweist, wobei ein Aufzeichnen der Ton- und/oder Bildinformation in der ersten Speichereinrichtung (3) ansprechend auf ein positives Vergleichsergebnis der empfangenen Ton- und/oder Bildinformation mit wenigstens einem der charakteristischen Daten ausgelöst wird, **dadurch gekennzeichnet, daß** die Vorrichtung (1) ferner eine Verarbeitungseinrichtung (6) aufweist, welche aus der mit der ersten Empfangseinrichtung empfangenen Ton- und/oder Bildinformation ein Identifizierungsdatum als einen charakteristischen Vektor bestimmt und diesen mit den als korrespondierende charakteristische Vektoren vorgespeicherten charakteristischen Daten vergleicht.

23. Verfahren nach Anspruch 22, **dadurch gekennzeichnet, daß** eine zweite Empfangseinrichtung (12) vorgesehen ist, mit welcher die für die Ton- und/oder Bildinformation charakteristischen Daten empfangen werden.

24. Verfahren nach Anspruch 23, **dadurch gekennzeichnet, daß** die zweite Empfangseinrichtung (12), insbesondere über das Internet, mit den charakteristischen Daten programmierbar ist.

25. Verfahren nach einem der Ansprüche 22 bis 24, **dadurch gekennzeichnet, daß** die Vorrichtung (1) ferner eine Pufferspeichereinrichtung (5) aufweist, in der die empfangene Ton- und/oder Bildinformation für deren Vergleich mit wenigstens einem der charakteristischen Daten zwischengespeichert wird.

26. Verfahren nach Anspruch 25, **dadurch gekennzeichnet, daß** die Pufferspeichereinrichtung (5) ein FIFO-Speicher ist.

27. Verfahren nach einem der vorhergehenden Ansprüche 22 bis 26, **dadurch gekennzeichnet, daß** die Vorrichtung (1) ferner eine Abspieleinrichtung (8) zum Abspielen der in der ersten Speichereinrichtung (3) gespeicherten Ton- und/oder Bildinformation aufweist.

28. Verfahren nach einem der vorhergehenden Ansprüche 22 bis 27, **dadurch gekennzeichnet, daß** die Vorrichtung (1) ferner eine Auswahleinrichtung (7) zum Auswählen der in der ersten Speichereinrichtung (3) gespeicherten Ton- und/oder Bildinformation aufweist.

29. Verfahren nach einem der vorhergehenden Ansprüche 22 bis 28, **dadurch gekennzeichnet, daß** die zweite Speichereinrichtung (4) der Ton- und/oder Bildinformation zugeordnete weitere Daten speichert.

30. Verfahren nach Anspruch 29, **dadurch gekennzeichnet, daß** die Vorrichtung (1) eine Anzeigeeinrichtung (9) aufweist, in welcher die der Ton- und/oder Bildinformation zugeordneten weiteren Daten angezeigt werden.

31. Verfahren nach Anspruch 29 oder 30, **dadurch gekennzeichnet, daß** die zweite Empfangseinrichtung (12) zum Empfangen der der Ton- und/oder Bildinformation zugeordneten weiteren Daten vorgesehen ist.

32. Verfahren nach Anspruch **31, dadurch gekennzeichnet, daß** die zweite Empfangseinrichtung (12), insbesondere über das Internet, mit den der Ton- und/oder Bildinformation zugeordneten weiteren Daten programmierbar ist.

33. Verfahren nach einem der vorhergehenden Ansprüche 22 bis 32, **dadurch gekennzeichnet, daß** die erste Empfangseinrichtung (2) im Wesentlichen kontinuierlich auf Empfang ist.

34. Verfahren nach einem der vorhergehenden Ansprüche 22 bis 33, **dadurch gekennzeichnet, daß** die zweite Empfangseinrichtung (12) ansprechend auf eine entsprechende Eingabe eines Anwenders und/oder zu vorbestimmten Zeitpunkten sich von einer externen Quelle aktuelle Daten für die zweite Speichereinrichtung (4) herunterlädt, wobei diese heruntergeladenen Daten die in der zweiten Speichereinrichtung (4) gespeicherten Daten ergänzen und/oder ersetzen.

35. Verfahren nach einem der vorhergehenden Ansprüche 22 bis 34, **dadurch gekennzeichnet, daß** die charakteristischen Daten die Ton- und/oder Bildinformation aus einer vorgegebenen Menge eindeutig identifizieren.

36. Verfahren nach einem der vorhergehenden Ansprüche 22 bis 35, **dadurch gekennzeichnet, daß** ein charakteristischer Vektor eine Ton- und/oder Bildinformation, insbesondere ein zu speicherndes Ton- und/oder Bildwerk, eindeutig identifiziert.

37. Verfahren nach einem der vorhergehenden Ansprüche 22 bis 36, **dadurch gekennzeichnet, daß** die charakteristischen Daten die Länge eines Musik- oder Filmwerkes aufweisen.

38. Verfahren nach einem der vorhergehenden Ansprüche 22 bis 37, **dadurch gekennzeichnet, daß** die erste und zweite Empfangseinrichtung (2, 12) analoge und/oder digitale Signale empfangen.

39. Verfahren nach einem der vorhergehenden Ansprüche 22 bis 38, **dadurch gekennzeichnet, daß** die Vorrichtung (1) eine Speichereinrichtung aufweist, welche die erste Speichereinrichtung (3) und die zweite Speichereinrichtung (4) umfasst.

40. Verfahren nach einem der vorhergehenden Ansprüche 22 bis 39, **dadurch gekennzeichnet, daß** die Vorrichtung (1) eine Empfängereinrichtung aufweist, welche die erste Empfängereinrichtung (2) und die zweite Empfängereinrichtung (12) umfasst.

41. Verfahren nach einem der vorhergehenden Ansprüche 22 bis 40, **dadurch gekennzeichnet, daß** die Vorrichtung (1) portabel ist.

42. Verfahren nach einem der vorhergehenden Ansprüche 22 bis 41, **dadurch gekennzeichnet, daß** die Vorrichtung (1) in einem der folgenden Geräte integriert ist:
(Auto-) Radio, MP3-Spieler, Walkman, Kassettenrecorder, Fernseher, Videorecorder, DVD-Aufzeichnungs- und/oder Wiedergabegerät, PDA, Mobiltelefon und dergleichen.

## Claims

1. Device (1) for recording audio and/or visual information having a first receiver apparatus (2) for receiving the audio and/or visual information and a first memory apparatus (3) for storing the audio and/or visual information, wherein the device (1) also has a second memory apparatus (4) for storing data which is characteristic of the audio and/or visual information, and in which recording of the audio and/or visual information in the first memory apparatus (3) is triggered in response to a positive comparison result of the received audio and/or visual information with at least one of the characteristic data items, **characterized in that** the device also has a processing apparatus (6) which determines an identification data item as a characteristic vector from the audio and/or visual information received with the first receiver apparatus, and compares said vector with the characteristic data previously stored as corresponding characteristic vectors.

2. Device (1) according to Claim 1, **characterized in that** a second receiver apparatus (12) is provided with which the data which is characteristic of the audio and/or visual information is received.

3. Device (1) according to Claim 2, **characterized in that** the second receiver apparatus (12) can be programmed with the characteristic data, in particular over the Internet.

4. Device (1) according to one of Claims 1 to 3, **characterized in that** the device (1) also has a buffer apparatus (5) in which the received audio and/or visual information is buffered for comparison with at least one of the characteristic data items.

5. Device (1) according to Claim 4, **characterized in that** the buffer apparatus (5) is a FIFO memory.

6. Device (1) according to one of the preceding claims, **characterized in that** the device (1) also has a playback apparatus (8) for playing back the audio and/or visual information stored in the first memory apparatus (3).

7. Device (1) according to one of the preceding claims, **characterized in that** the device (1) also has a selection apparatus (7) for selecting the audio and/or visual information stored in the first memory apparatus (3).

8. Device (1) according to one of the preceding claims, **characterized in that** the second memory apparatus (4) stores further data which is assigned to the audio and/or visual information.

9. Device (1) according to Claim 8, **characterized in that** the device (1) has a display apparatus (9) in which the further data which is assigned to the audio and/or visual information is displayed.

10. Device (1) according to Claim 8 or 9, **characterized in that** the second receiver apparatus (12) is provided for receiving the further data which is assigned to the audio and/or visual information.

11. Device (1) according to Claim 10, **characterized in that** the second receiver apparatus (12) can be programmed, in particular over the Internet, with the further data which is assigned to the audio and/or visual information.

12. Device (1) according to one of the preceding claims, **characterized in that** the first receiver apparatus (2) is essentially continuously set to reception.

13. Device (1) according to one of the preceding claims, **characterized in that** the second receiver apparatus (12) downloads current data for the second memory apparatus (4) from an external source in response to a corresponding input by a user and/or at predetermined times, when this downloaded data supplement's and/or replaces the data stored in the second memory apparatus (4).

14. Device (1) according to one of the preceding claims, **characterized in that** the characteristic data uniquely identifies the audio and/or visual information from a predefined set.

15. Device (1) according to one of the preceding claims, **characterized in that** a characteristic vector uniquely identifies audio and/or visual information, in particular an audio work and/or visual work to be stored.

16. Device (1) according to one of the preceding claims, **characterized in that** the characteristic data is of the length of a music work or cinematic work.

17. Device (1) according to one of the preceding claims, **characterized in that** the first and second receiver apparatuses (2, 12) receive analogue and/or digital signals.

18. Device (1) according to one of the preceding claims, **characterized in that** the device has a memory apparatus which comprises the first memory apparatus (3) and the second memory apparatus (4).

19. Device (1) according to one of the preceding claims, **characterized in that** the device has a receiver apparatus which comprises the first receiver apparatus (2) and the second receiver apparatus (12).

20. Device (1) according to one of the preceding claims, **characterized in that** the device (1) is portable.

21. Device (1) according to one of the preceding claims, **characterized in that** the device (1) is integrated into one of the following units:
(car) radio, MP3 player, Walkman, cassette recorder, television, video recorder, DVD recording and/or playback unit, PDA, mobile telephone and the like.

22. Method for recording audio information and/or visual information having a device (1) which has a first receiver apparatus (2) for receiving the audio and/or visual information, a first memory apparatus (3) for storing the audio and/or visual information and also has a second memory apparatus (4) for storing data which is characteristic of the audio and/or visual information, wherein recording of the audio and/or visual information in the first memory apparatus (3) is triggered in response to a positive comparison result of the received audio and/or visual information with at least one of the characteristic data items, **characterized in that** the device (1) also has a processing apparatus (6) which determines an identification data item as a characteristic vector from the audio and/or visual information received with the first receiver apparatus, and compares said vector with the characteristic data previously stored as corresponding characteristic vectors.

23. Method according to Claim 22, **characterized in that** a second receiver apparatus (12) is provided with which the data which is characteristic of the audio and/or visual information is received.

24. Method according to Claim 23, **characterized in that** the second receiver apparatus (12) can be programmed with the characteristic data, in particular over the Internet.

25. Method according to one of Claims 22 to 24, **characterized in that** the device (1) also has a buffer apparatus (5) in which the received audio and/or visual information is buffered for comparison with at least one of the characteristic data.

26. Method according to Claim 25, **characterized in that** the buffer apparatus (5) is a FIFO memory.

27. Method according to one of the preceding Claims 22 to 26, **characterized in that** the device (1) also has a playback apparatus (8) for playing back the audio and/or visual information stored in the first memory apparatus (3).

28. Method according to one of the preceding Claims 22 to 27, **characterized in that** the device (1) also has a selection apparatus (7) for selecting the audio and/or visual information stored in the first memory apparatus (3).

29. Method according to one of the preceding Claims 22 to 28, **characterized in that** the second memory apparatus (4) stores further data which is assigned to the audio and/or visual information.

30. Method according to Claim 29, **characterized in that** the device (1) has a display apparatus (9) in which the further data which is assigned to the audio and/or visual information is displayed.

31. Method according to Claim 29 or 30, **characterized in that** the second receiver apparatus (12) is provided for receiving the further data which is assigned to the audio and/or visual information.

32. Method according to Claim 31, **characterized in that** the second receiver apparatus (12) can be programmed, in particular over the Internet, with the further data which is assigned to the audio and/or visual information.

33. Method according to one of the preceding Claims 22 to 32, **characterized in that** the first receiver apparatus (2) is essentially continuously set to reception.

34. Method according to one of the preceding Claims 22 to 33, **characterized in that** the second receiver apparatus (12) downloads current data for the second memory apparatus (4) from an external source in response to a corresponding input by a user and/or at predetermined times, when this downloaded data supplements and/or replaces the data stored in the second memory apparatus (4).

35. Method according to one of the preceding Claims 22 to 34, **characterized in that** the characteristic data uniquely identifies the audio and/or visual information from a predefined set.

36. Method according to one of the preceding Claims 22 to 35, **characterized in that** a characteristic vector uniquely identifies audio and/or visual information, in particular an audio work and/or visual work to be stored.

37. Method according to one of the preceding Claims 22 to 36, **characterized in that** the characteristic data is of the length of music work or cinematic work.

38. Method according to one of the preceding Claims 22 to 37, **characterized in that** the first and second receiver apparatuses (2, 12) receive analogue and/or digital signals.

39. Method according to one of the preceding Claims 22 to 38, **characterized in that** the device (1) has a memory apparatus which comprises the first memory apparatus (3) and the second memory apparatus (4).

40. Method according to one of the preceding Claims 22 to 39, **characterized in that** the device (1) has a receiver apparatus which comprises the first receiver apparatus (2) and the second receiver apparatus (12).

41. Method according to one of the preceding Claims 22 to 40, **characterized in that** the device (1) is portable.

42. Method according to one of the preceding Claims 22 to 41, **characterized in that** the device (1) is integrated into one of the following units:
(car) radio, MP3 player, Walkman, cassette recorder, television, video recorder, DVD recording and/or playback unit, PDA, mobile telephone and the like.

## Revendications

1. Dispositif (1) pour l'enregistrement d'information de son et/ou d'information d'image comportant un premier dispositif de réception (2) pour recevoir l'information de son et/ou l'information d'image et un premier dispositif de mémoire (3) pour mémoriser l'information de son et/ou l'information d'image, dans lequel le dispositif (1) comporte en outre un second dispositif de mémoire (4) pour mémoriser des données caractéristiques de l'information de son et/ou de l'information d'image, et dans lequel un enregistrement de l'information de son et/ou de l'information d'image dans le premier dispositif de mémoire (3) étant déclenché en réponse à un résultat positif de comparaison de l'information de son et/ou de l'information d'image reçue à au moins l'une des données caractéristiques, **caractérisé en ce que** le dispositif comporte en outre un dispositif de traitement (6), qui, à partir de l'information de son et/ou de l'information d'image reçue par le premier dispositif de réception, détermine une donnée d'identification sous la forme d'un vecteur caractéristique et compare ce dernier aux données caractéristiques préalablement mémorisées en tant que vecteurs caractéristiques correspondants.

2. Dispositif (1) selon la revendication 1, **caractérisé en ce qu'**il est prévu un second dispositif de réception (12) à l'aide duquel sont reçues les données caractéristiques pour l'information de son et/ou l'information d'image.

3. Dispositif (1) selon la revendication 2, **caractérisé en ce que** le second dispositif de réception (12) est programmable, notamment au moyen du réseau Internet, avec les données caractéristiques.

4. Dispositif (1) selon l'une des revendications 1 à 3, **caractérisé en ce que** le dispositif (1) comporte en outre un dispositif de mémoire tampon (5) dans lequel l'information de son et/ou l'information d'image reçue sont mémorisées temporairement pour leur comparaison à au moins l'une des données caractéristiques.

5. Dispositif (1) selon la revendication 4, **caractérisé en ce que** le dispositif de mémoire tampon (5) est une mémoire FIFO.

6. Dispositif (1) selon l'une des revendications précédentes, **caractérisé en ce que** le dispositif (1) comporte en outre un dispositif de lecture (8) pour lire l'information de son et/ou l'information d'image mémorisées dans le premier dispositif de mémoire (3).

7. Dispositif (1) selon l'une des revendications précédentes, **caractérisé en ce que** le dispositif (1) comporte en outre un dispositif de sélection (7) pour sélectionner l'information de son et/ou l'information d'image mémorisées dans le premier dispositif de mémoire.

8. Dispositif (1) selon l'une des revendications précédentes, **caractérisé en ce que** le second dispositif de mémoire (4) mémorise d'autres données associées à l'information de son et/ou l'information d'image.

9. Dispositif (1) selon la revendication 8, **caractérisé en ce que** 1e dispositif (1) comporte un dispositif d'affichage (9), dans lequel les autres données associées à l'information de son et/ou l'information d'image sont affichées.

10. Dispositif (1) selon la revendication 8 ou 9, **caractérisé en ce que** le second dispositif de réception (12) est prévu pour la réception des autres données associées à l'information de son et/ou à l'information d'image.

11. Dispositif (1) selon la revendication 10, **caractérisé en ce que** le second dispositif de réception (12) est programmable, notamment par l'intermédiaire du réseau Internet, avec les autres données associées à l'information de son et/ou l'information d'image.

12. Dispositif (1) selon l'une des revendications précédentes, **caractérisé en ce que** le premier dispositif de réception (2) est branché essentiellement continûment sur la réception.

13. Dispositif (1) selon l'une des revendications précédentes, **caractérisé en ce qu'**en réponse à une entrée correspondante d'un utilisateur et/ou à des instants prédéterminés, le second dispositif de réception (12) télécharge à partir d'une source externe, des données actuelles pour le second dispositif de mémoire (4), ces données téléchargées complétant et/ou remplaçant les données mémorisées dans le second dispositif de mémoire (4).

14. Dispositif (1) selon l'une des revendications précédentes, **caractérisé en ce que** les données caractéristiques identifient d'une manière unique l'information de son et/ou l'information d'image parmi une quantité prédéterminée.

15. Dispositif (1) selon l'une des revendications précédentes, **caractérisé en ce qu'**un vecteur caractéristique identifie de façon nette une information de son et/ou une information d'image, notamment une oeuvre acoustique et/ou visuelle devant être mémorisée.

16. Dispositif (1) selon l'une des revendications précédentes, **caractérisé en ce que** les données caractéristiques comportent la longueur d'un morceau de musique ou d'un film.

17. Dispositif (1) selon l'une des revendications précédentes, **caractérisé en ce que** les premier et second dispositifs de réception (2, 12) reçoivent des signaux analogiques et/ou des signaux numériques.

18. Dispositif (1) selon l'une des revendications précédentes, **caractérisé en ce que** le dispositif comporte un dispositif de mémoire, qui comprend le premier dispositif de mémoire (3) et le second dispositif de mémoire (4).

19. Dispositif (1) selon l'une des revendications précédentes, **caractérisé en ce que** le dispositif comprend le premier dispositif de réception (2) et le second dispositif de réception (12).

20. Dispositif (1) selon l'une des revendications précédentes, **caractérisé en ce que** le dispositif (1) est portable.

21. Dispositif (1) selon l'une des revendications précédentes, **caractérisé en ce que** le dispositif (1) est intégré dans l'un des appareils suivants: (auto)radio, lecteur M3, baladeur, enregistreur à cassettes, téléviseur, enregistreur vidéo, appareil d'enregistrement et/ou de reproduction de disques DVD, unité PDA, téléphone mobile et analogue.

22. Procédé pour l'enregistrement d'une information de son et/ou d'une information d'image comportant un premier dispositif de réception (2) pour recevoir l'information de son et/ou l'information d'image et un premier dispositif de mémoire (3) pour mémoriser l'information de son et/ou l'information d'image, et en outre un second dispositif de mémoire (4) pour mémoriser des données caractéristiques de l'information de son et/ou de l'information d'image, et dans lequel un enregistrement de l'information de son et/ou de l'information d'image dans le premier dispositif de mémoire (3) est déclenché en réponse à un résultat positif de comparaison de l'information de son et/ou d'image reçue à au moins l'une des données caractéristiques, **caractérisé en ce que** le dispositif (1) comporte en outre un dispositif de traitement (6) qui, à partir de l'information de son et/ou de l'information d'image, reçue par le premier dispositif de réception, détermine une donnée d'identification sous la forme d'un vecteur caractéristique et compare ce dernier aux données caractéristiques préalablement mémorisées en tant que vecteurs caractéristiques correspondants.

23. Procédé selon la revendication 22, **caractérisé en ce qu'**il est prévu un second dispositif de réception (12) à l'aide duquel sont reçues les données caractéristiques pour l'information de son et/ou l'information d'image.

24. Procédé selon la revendication 23, **caractérisé en ce que** le second dispositif de réception (12) est programmable, notamment au moyen du réseau Internet, avec les données caractéristiques.

25. Procédé selon l'une des revendications 22 à 24, **caractérisé en ce que** le dispositif (1) comporte en outre un dispositif de mémoire tampon (5) dans lequel l'information de son et/ou l'information d'image reçue sont mémorisées temporairement pour leur comparaison à au moins l'une des données caractéristiques.

26. Procédé selon la revendication 25, **caractérisé en ce que** le dispositif de mémoire tampon (5) est une mémoire FIFO.

27. Procédé selon l'une des revendications précédentes 22 à 26 le dispositif (1) comporte en outre un dispositif de lecture (8) pour lire l'information de son et/ou l'information d'image mémorisées dans le premier dispositif de mémoire (3).

28. Procédé selon l'une des revendications 22 à 27, **caractérisé en ce que** le dispositif (1) comporte en outre un dispositif de sélection (7) pour sélectionner l'information de son et/ou l'information d'image mémorisées dans le premier dispositif de mémoire (3).

29. Procédé selon l'une des revendications précédentes 22 à 28, **caractérisé en ce que** le second dispositif de mémoire (4) mémorise d'autres données associées à l'information de son et/ou l'information d'image.

30. Procédé selon la revendication 29, **caractérisé en ce que** le dispositif (1) comporte un dispositif d'affichage (9), dans lequel les autres données associées à l'information de son et/ou l'information d'image sont affichées.

31. Procédé selon la revendication 29 ou 30, **caractérisé en ce que** le second dispositif de réception (12) est prévu pour la réception des autres données associées à l'information de son et/ou à l'information d'image.

32. Procédé selon la revendication 31, **caractérisé en ce que** le second dispositif de réception (12) est programmable, notamment par l'intermédiaire du réseau Internet, avec les autres données associées à l'information de son et/ou à l'information d'image.

33. Procédé selon l'une des revendications précédentes 22 à 32, **caractérisé en ce que** le premier dispositif de réception (2) est branché essentiellement continûment sur la réception.

34. Procédé selon l'une des revendications précédentes 22 à 33, **caractérisé en ce qu'**en réponse à une entrée correspondante d'un utilisateur et/ou à des instants prédéterminés, le second dispositif de réception (12) télécharge à partir d'une source externe des données actuelles pour le second dispositif de mémoire (4), ces données téléchargées complétant et/ou remplaçant les données mémorisées dans le second dispositif de mémoire (4).

35. Procédé selon l'une des revendications précédentes 22 à 34, **caractérisé en ce que** les données caractéristiques identifient d'une manière unique l'information de son et/ou l'information d'image parmi une quantité prédéterminée.

36. Procédé selon l'une des revendications précédentes 22 à 35, **caractérisé en ce qu'**un vecteur caractéristique identifie de façon nette une information de son et/ou une information d'image, notamment une oeuvre acoustique et/ou visuelle devant être mémorisée.

37. Procédé selon l'une des revendications précédentes 22 à 36, **caractérisé en ce que** les données caractéristiques comportent la longueur d'un morceau de musique ou d'un film.

38. Procédé selon l'une des revendications précédentes 22 à 37, **caractérisé en ce que** les premier et second dispositifs de réception (2, 12) reçoivent des signaux analogiques et/ou des signaux numériques.

39. Procédé selon l'une des revendications précédentes 22 à 38, **caractérisé en ce que** le dispositif (1) comporte un dispositif de mémoire, qui comprend le premier dispositif de mémoire (3) et le second dispositif de mémoire (4).

40. Procédé selon l'une des revendications précédentes 22 à 39, **caractérisé en ce que** le dispositif comprend le premier dispositif de réception (2) et le second dispositif de réception (12).

41. Procédé selon l'une des revendications précédentes 22 à 40, **caractérisé en ce que** le dispositif (1) est portable.

42. Procédé selon l'une des revendications précédentes 22 à 41, **caractérisé en ce que** le dispositif (1) est intégré dans l'un des appareils suivants: (auto)radio, lecteur M3, baladeur, enregistreur à cassettes, téléviseur, enregistreur vidéo, appareil d'enregistrement et/ou de reproduction de disques DVD, unité PDA, téléphone mobile et analogue.
